# EUROPEAN PATENT APPLICATION

(11) **EP 4 346 058 A1**
(43) Date of publication of application: **03.04.2024**
(21) Application number: 23190592.8
(22) Date of filing: 09.08.2023
(51) Int. Cl.: H02J 7/00

(54) **BATTERY ISOLATION SWITCH**

(30) Priority: 12.08.2022 KR 20220101253
(71) Applicant: Korea Aerospace Industries, Ltd., Sacheon-si, Gyeongsangnam-do 52529 (KR)
(72) Inventor: KIM, Suyong, 52529 Sacheon-si, Gyeongsangnam-do (KR)
(74) Representative: Eisenführ Speiser

(57) **Abstract**

A battery isolation switch includes a power input connector to which power is input from a battery, a first side surface panel portion 110 disposed on a side surface of the battery isolation switch, an upper plate panel portion 150 disposed in an upper portion of the battery isolation switch, and a bottom surface panel portion 160 provided with a power output connector 161 and disposed in a lower portion of the battery isolation switch.

## Description

### BACKGROUND

### Field

The present disclosure relates to a battery isolation switch, and more particularly, to a battery isolation switch that stably supplies high-voltage and high-current power to electric vehicles, aircraft, satellites, launch vehicles, and the like.

### Related Art

Recently, a battery isolation switch is used where high-voltage and high-current power must be stably supplied, such as electric vehicles, aircraft, and electric Vertical Take Off and Landing (eVTOL) vehicles that use a high-power battery as a power source.

In particular, in the case of a satellite, since the satellite cannot be repaired once the satellite is in orbit, thorough testing and verification are required to prove normal operation under the environment that the satellite will experience from launch to operation during the development process. In this process, it is required to attach/detach the battery power each time, such as numerous launch environment tests, space environment tests, and satellite assembly and disassembly. However, in the case of high-power batteries for satellites, when the battery is directly connected to and disconnected from satellite equipment, an electric shock accident may occur to the operator, resulting in battery damage. In addition, the battery is naturally slowly discharged during satellite testing, storage, transportation, or delayed launch of the launch vehicle.

### SUMMARY

Therefore, the present disclosure is to solve the above problems, and an object thereof is to provide a battery isolation switch that can turn on/off the battery remotely, prevent electric shock to workers that can occur during every test and assembly, prevent battery damage, and solve a battery discharge problem due to the delay in launching the satellite.

According to an aspect of the present disclosure, there is provided a battery isolation switch including: a power input connector to which power is input from a battery; a first side surface panel portion 110 disposed on a side surface of the battery isolation switch; an upper plate panel portion 150 disposed in an upper portion of the battery isolation switch; and a bottom surface panel portion 160 provided with a power output connector 161 and disposed in a lower portion of the battery isolation switch.

The battery isolation switch may further include a second side surface pane portion 120, a third side surface panel portion 130, and a fourth side surface panel portion 140 disposed on the side surface of the battery isolation switch.

The battery isolation switch may further include a first pillar 101, a second pillar 102, a third pillar 103, and a fourth pillar 104 respectively disposed at four corners of the battery isolation switch.

The upper plate panel portion 150 may be detachably coupled to upper ends of the first to fourth pillars 101, 102, 103, and 104 with screws, and the bottom surface panel portion 160 may be detachably coupled to lower ends of the first to fourth pillars 101, 102, 103, and 104 with screws.

The first side surface panel portion 110 may be detachably coupled to the first pillar 101 and the second pillar 102 with screws, the second side surface panel portion 120 may be detachably coupled to the second pillar 102 and the fourth pillar 104 with screws, the third side surface panel portion 130 may be detachably coupled to the first pillar 101 and the third pillar 103 with screws, and the fourth side surface panel portion 140 may be detachably coupled to the third pillar 103 and the fourth pillar 104 with screws.

The power input connector may be disposed in the first side surface panel portion 110.

A remote-control connector 121 may be disposed in the second side surface panel portion 120.

The power input connector may include a first power input connector 111 and a second power input connector 112 to which power is input from a first battery 10, and a third power input connector 113 and a fourth power input connector 114 to which power is input from a second battery 20.

A first relay module 170 and a second relay module 180 separated from each other may be provided inside the battery isolation switch.

The first relay module 170 may include a first relay 171 and a second relay 172, and the second relay module 180 may include a first relay 181 and a second relay 182.

The first power input connector 111 may be connected to the first relay module 170 through a first output line 111a and connected to the second relay module 180 through a second output line 111b, the second power input connector 112 may be connected to the first relay module 170 through a first output line 112a and connected to the second relay module 180 through a second output line 112b, the third power input connector 113 may be connected to the first relay module 170 through a first output line 113a and connected to the second relay module 180 through a second output line 113b, and the fourth power input connector 114 may be connected to the first relay module 170 through a first output line 114a and connected to the second relay module 180 through a second output line 114b.

The battery isolation switch may further include an integrated output unit 190 to which power is input from the first relay module 170 and the second relay module 180, in which power from the first relay module 170 and the second relay module 180 may be integrated in the integrated output unit 190 and transmitted to the power output connector 161.

The battery isolation switch may further include a second side surface panel portion 120, a third side surface panel portion 130, and a fourth side surface panel portion 140 disposed on the side surface of the battery isolation switch, in which the first relay module 170 may be disposed on the third side surface panel portion 130, and the second relay module 180 may be disposed on the fourth side surface panel portion 140 facing the first side surface panel portion 110.

The first relay module 170 and the second relay module 180 may be arranged in two different axial directions.

A groove 162 recessed upward may be formed on a bottom surface of the bottom surface panel portion 160, and the power output connector 161 may be disposed in the groove 162.

The battery isolation switch may be coupled to a target on which the battery isolation switch is installed by forming a mounting surface on the upper surface of the upper plate panel portion 150 or the bottom surface of the bottom surface panel portion 160.

Four first to fourth power input connectors 111, 112, 113, and 114 may be arranged in parallel.

Three power output connectors 161 may be arranged in parallel.

Two remote-control connectors 121 may be arranged in parallel.

### ADVANTAGEOUS EFFECTS

According to the present disclosure, it is possible to provide a battery isolation switch that can turn on/off the battery remotely, prevent electric shock to workers that can occur during every test and assembly, prevent battery damage, and solve a battery discharge problem due to the delay in launching the satellite.

### BRIEF DESCRIPTION OF THE DRAWINGS

FIG. 1 is a perspective view of a battery isolation switch according to the present disclosure.
FIG. 2 is a rear view of the battery isolation switch according to the present disclosure.
FIG. 3 is a left surface view of the battery isolation switch according to the present disclosure.
FIG. 4 is a bottom perspective view of the battery isolation switch according to the present disclosure.
FIG. 5 is a view illustrating an inside after separating the side surface panel from the battery isolation switch according to the present disclosure.
FIG. 6 is an electrical interface diagram including a power line and a signal line of the battery isolation switch according to the present disclosure.

### DESCRIPTION OF EXEMPLARY EMBODIMENTS

Advantages and features of the present disclosure, and methods of achieving them, will become clear with reference to the detailed description of the following embodiments taken in conjunction with the accompanying drawings. However, the present disclosure is not limited to the embodiments disclosed below, but will be embodied in a variety of different forms, only these embodiments make the disclosure of the present disclosure complete and are provided to completely inform those skilled in the art of the scope of the invention to which the present disclosure belongs, and the present disclosure is only defined by the scope of the claims. Thus, in some embodiments, well-known process steps, well-known device structures, and well-known techniques have not been described in detail in order to avoid obscuring the interpretation of the present disclosure. Like reference numbers designate like elements throughout the specification.

In order to clearly express various layers and regions in the drawings, the thickness may be enlarged. Like reference numerals have been assigned to like parts throughout the specification. When a part such as a layer, film, region, plate, or the like is said to be "on" another part, this includes not only the case where it is "directly on" the other part, but also the case where there is another part in between. Conversely, when a part is said to be "directly on" another part, it means that there is no other part in between. In addition, when a part such as a layer, film, region, plate, or the like is said to be "below" another part, this includes not only the case where it is "directly below" the other part, but also the case where another part is present in the middle. Conversely, when we say that a part is "directly below" another part, it means that there are no other parts in between.

The spatially relative terms "below", "beneath", "lower", "above", "upper", or the like may be used to easily describe the correlation between one element or element and another element or element as illustrated in the drawings. Spatially relative terms should be understood as encompassing different orientations of elements in use or operation in addition to the orientations illustrated in the figures. For example, when flipping elements illustrated in the figures, elements described as "below" or "beneath" other elements may be placed "above" the other elements. Thus, the exemplary term "below" may include directions both below and above. Elements may also be oriented in other orientations, and thus spatially relative terms may be interpreted according to orientation.

Hereinafter, a battery isolation switch according to a preferred embodiment of the present disclosure will be described in detail with reference to the drawings.

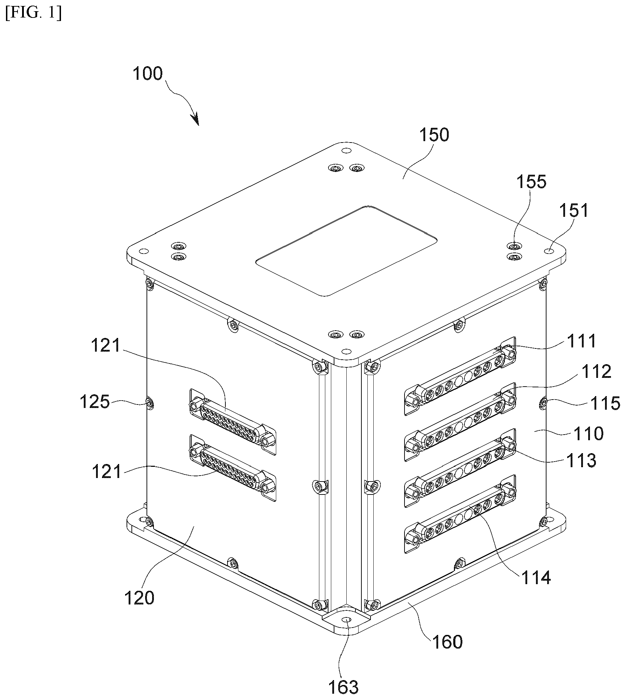

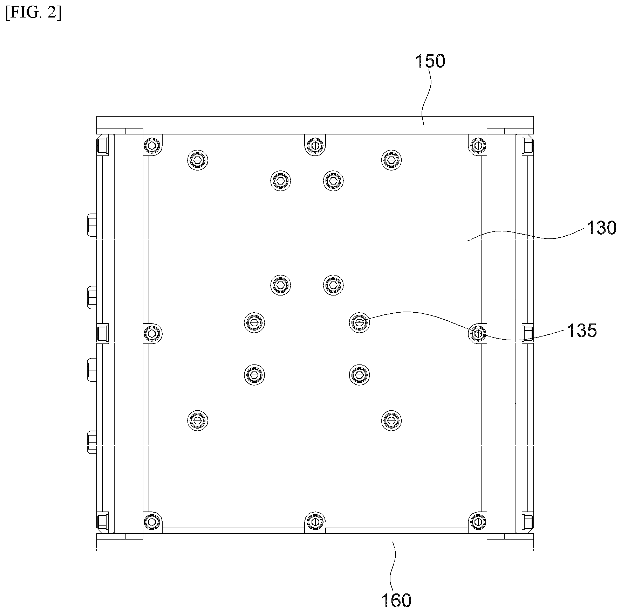

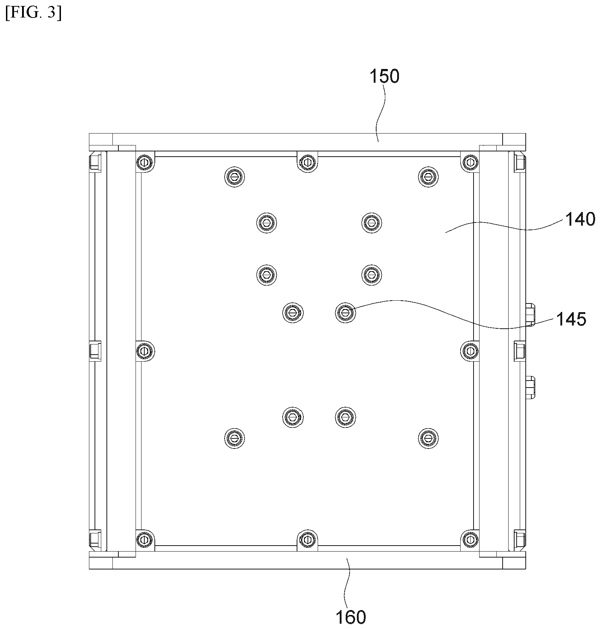

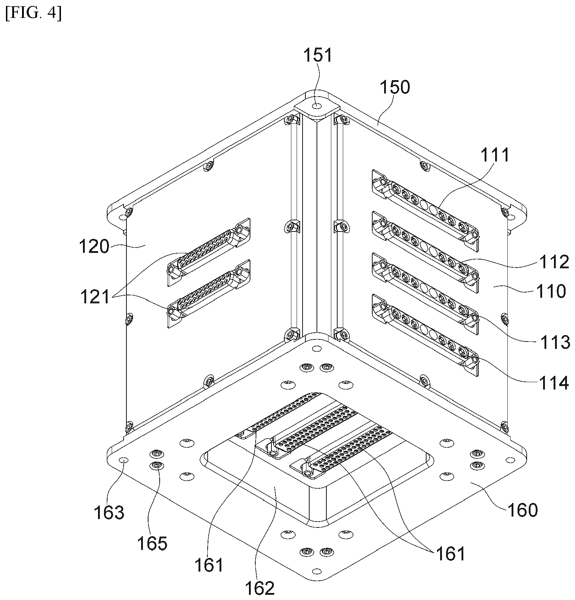

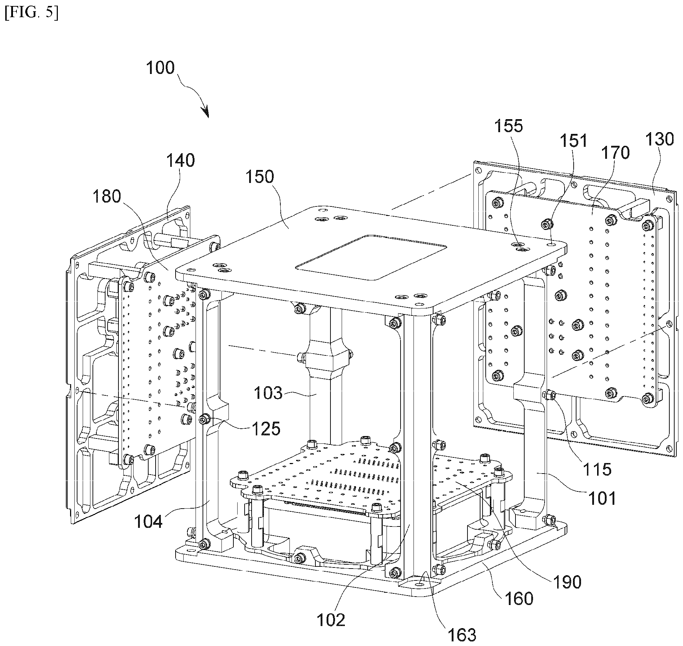

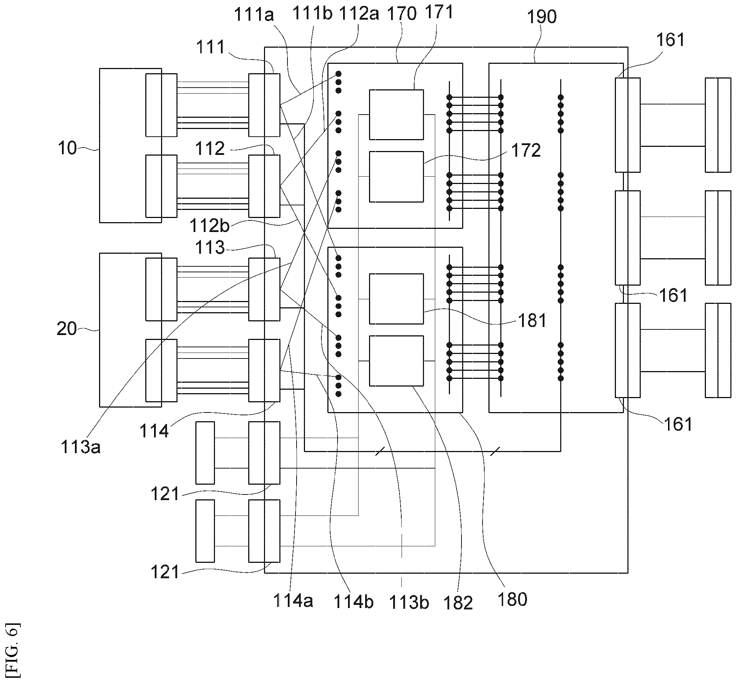

FIG. 1 is a perspective view of a battery isolation switch according to the present disclosure, FIG. 2 is a rear view of the battery isolation switch according to the present disclosure, FIG. 3 is a left surface view of the battery isolation switch according to the present disclosure, FIG. 4 is a bottom perspective view of the battery isolation switch according to the present disclosure, FIG. 5 is a view illustrating an inside after separating the side surface panel from the battery isolation switch according to the present disclosure, and FIG. 6 is an electrical interface diagram including a power line and a signal line of the battery isolation switch according to the present disclosure.

First, a battery isolation switch 100 according to a preferred embodiment of the present disclosure is formed in an approximate cube shape, and includes a first side surface panel portion 110 in which power input connectors 111, 112, 113, and 114 receiving power from a battery are disposed, a second side surface panel portion 120 in which a remote-control connector 121 capable of monitoring each relay status information and transmitting a remote command is disposed, a third side surface panel portion 130 in which a first relay module 170 is disposed therein, a fourth side surface panel portion 140 in which a second relay module 180 is disposed therein, an upper plate panel portion 150 disposed in an upper portion of the battery isolation switch 100, and a bottom surface panel portion 160 provided with a power output connector 161 mounted on an integrated output unit 190 and disposed in a lower portion of the battery isolation switch, in which the first to fourth side surface panel portions 110, 120, 130, and 140 constituting the side surfaces, the upper plate panel portion 150, and the bottom surface panel portion 160 are detachably coupled to first to fourth pillars 101, 102, 103, 104 of the battery isolation switch 100 with screws.

The first side surface panel portion 110 constitutes one side surface of four side surfaces, and in this embodiment, when the second side surface panel portion 120 is in front, the first side surface panel portion 110 is disposed on a right surface, and four power input connectors 111, 112, 113, and 114 connected to batteries 10 and 20 are disposed in the front side surface panel portion 110.

Four power input connectors 111, 112, 113, and 114 are arranged vertically, and power is input from the first battery 10 and the second battery 20 as two independent batteries. That is, the first power input connector 111 and the second power input connector 112 disposed vertically on the upper side receive power from the first battery 10, respectively, and the third power input connector 113 and the fourth power input connector 114 disposed vertically on the lower side receive power from the second battery 20. Each of the first to fourth power input connectors 111, 112, 113, and 114 is an 8-pin connector in this embodiment.

Left and right edges of the first side surface panel portion 110 including the power input connectors 111, 112, 113, and 114 are detachably coupled to the first pillar 101 and the second pillar 102 of the battery isolation switch 100 with screws 115.

As illustrated in FIG. 5, the first pillar 101, the second pillar 102, the third pillar 103, and the fourth pillar 104 are respectively disposed at the four corners of the battery isolation switch 100 according to the present disclosure, the upper plate panel portion 150 is coupled to upper ends of the first to fourth pillars 101, 102, 103, and 104, and the bottom surface panel portion 160 is coupled to lower ends of the first to fourth pillars 101, 102, 103, and 104.

The second side surface panel portion 120 is disposed on the front of the four side surfaces, and the remote-control connector 121 is disposed on the second side surface panel portion 120.

Two remote-control connectors 121 are arranged up and down, and front and rear ends of relays 171, 172, 181, and 182 to be described later are connected to the remote-control connector 121, respectively. Status information of relays 171, 172, 181, and 182 is transmitted to a satellite on-board computer and ground test support equipment through the remote-control connector 121, and the battery power can be controlled by remotely turning on/off the battery isolation switch 100. The remote-control connector 121 is a 25-pin connector in this embodiment.

Both edges of the second side surface panel portion 120 including the remote-control connector 121 are detachably coupled to the second pillar 102 and the fourth pillar 104 of the battery isolation switch 100 with screws 125.

The third side surface panel portion 130 constitutes one side surface of four side surfaces and is disposed on the rear side in this embodiment, and the first relay module 170 to be described later is detachably coupled to the inside of the third side surface panel portion (130) with screws 135.

In addition, both edges of the third side surface panel portion 130 are detachably coupled to the first pillar 101 and the third pillar 103 of the battery isolation switch 100 with screws.

The fourth side surface panel portion 140 constitutes one of the four side surfaces and in this embodiment is disposed on the left side of the front, and the second relay module 180 is detachably coupled to the inside of the fourth side surface panel portion 140 with screws 145. An angle between the third side surface panel portion 130 and the fourth side surface panel portion 140 is 90 degrees, and thus, an angle between the first module 170 disposed in the third side surface panel portion 130 and the second relay module 180 disposed in the fourth side surface panel portion 140 also is 90 degrees.

Both edges of the fourth side surface panel portion 140 are detachably coupled to the third pillar 103 and the fourth pillar 104 of the battery isolation switch 100 with screws.

The upper plate panel portion 150 is formed in a square plate shape, is disposed in an upper portion of the battery isolation switch 100, and has upper plate coupling holes 151 formed at four corner portions. The battery isolation switch 100 is coupled and fixed to an electric test bench through the upper plate coupling holes 151 with screws or the like, and thus, the upper surface of the upper plate panel portion 150 provides a mounting surface on the electrical test bench during a space environment test of the battery isolation switch 100 or an electrical function test of a launch vehicle or satellite.

Four corner portions of the upper plate panel portion 150 are detachably coupled to the upper ends of the first to fourth pillars 101, 102, 103, and 104 of the battery isolation switch 100 with screws 155.

The bottom surface panel portion 160 is formed in a square plate shape and is disposed on a lower portion of the battery isolation switch 100, a concave groove 162 in a rectangular shape is formed on the bottom surface of the bottom surface panel portion 160, and the integrated power output connector 161 is disposed in the groove 162. Moreover, as illustrated in FIG. 5, the integrated output unit 190 is disposed on the upper surface (inner side) of the bottom surface panel portion 160.

As illustrated in FIG. 4, three power output connectors 161 are arranged in parallel on the upper surface of the groove 162 recessed upward, and the power of the first and second relay modules 170 and 180 passes through the relay switches 171, 172, 181, and 182 and is integrated into one integrated output unit 190 and transmitted to three power output connectors 161. A separate connector is coupled to the power output connector 161 to supply power to the launch vehicle or satellite.

The power output connector 161 is a 50-pin connector in this embodiment.

In addition, bottom surface coupling holes 163 are formed at four corners of the bottom surface panel portion 160, the battery isolation switch 100 is coupled and fixed to the launch vehicle or satellite with screws or the like through the bottom surface coupling holes 163, and thus, the bottom surface of the bottom surface panel portion 160 forms the mounting surface.

Four corner portions of the bottom surface panel portion 160 are detachably coupled to the lower ends of the first to fourth pillars 101, 102, 103, and 104 of the battery isolation switch 100 with screws 165.

In the present disclosure, as described above, the recessed groove 162 is formed on the bottom surface of the bottom surface panel portion 160 forming the mounting surface, and by disposing the power output connector 161 on the upper surface of the groove 162, it is possible to detach/mount the panel on which equipment is mounted during satellite assembly, disassembly, and testing without interference from the harness.

Next, referring to FIG. 6, a power line and a signal line in the battery isolation switch 100 according to the present disclosure will be described.

First, the first battery 10 is connected to the first power input connectors 111 and the second power input connector 112 of the battery isolation switch 100, and the second battery 20 is connected to the third power input connectors 113 and the fourth power input connector 114.

The first power input connector 111 is connected to the first relay module 170 and the second relay module 180 by two output lines 111a and 111b.

That is, the first power input connector 111 is connected to the first relay module 170 by the first output line 111a, and power is input from the first power input connector 111 to the second relay module 180 through the second output line 111b.

The second power input connector 112 is also connected to the first relay module 170 and the second relay module 180 by two output lines 112a and 112b.

That is, the second power input connector 112 is connected to the first relay module 170 by the first output line 112a, and power is input from the second power input connector 112 to the second relay module 180 through the second output line 112b.

The third power input connector 113 is connected to the first relay module 170 and the second relay module 180 by two output lines 113a and 113b.

That is, the third power input connector 113 is connected to the first relay module 170 by the first output line 113a, and power is input from the third power input connector 113 to the second relay module 180 through the second output line 113b.

The fourth power input connector 114 is also connected to the first relay module 170 and the second relay module 180 by two output lines 114a and 114b.

That is, the fourth power input connector 114 is connected to the first relay module 170 by the first output line 114a, and power is input from the fourth power input connector 114 to the second relay module 180 through the second output line 114b.

The first relay module 170 includes the first relays 171 and the second relay 172, and the battery power input from the first output lines 111a, 112a, 113a, and 114a of the first to fourth power input connectors 111, 112, 113, and 114 to the first relay module 170 is controlled by the switches of the first relay 171 and the second relay 172 ON/OFF. The first relay 171 and the second relay 172 control the battery power input to the first relay module 170 from the first to fourth power input connectors 111, 112, 113, and 114, and even when one of the first relay 171 and the second relay 172 fails, the battery power can be controlled by the remaining relay switches.

The second relay module 180 includes the first relays 181 and the second relay 182, and the battery power input from the second output lines 111b, 112b, 113b, and 114b of the first to fourth power input connectors 111, 112, 113, and 114 to the second relay module 180 is controlled by the switches of the first relay 171 and the second relay 172 ON/OFF. The first relay 181 and the second relay 182 control the battery power input to the second relay module 180 from the first to fourth power input connectors 111, 112, 113, and 114, and even when one of the first relay 181 and the second relay 182 fails, the battery power can be controlled by the remaining relay switches.

In this way, the power of the first and second relay modules 170 and 180 passes through the relay switches 171, 172, 181, and 182, is integrated into the integrated output unit 190, and is transmitted to three power output connectors 161. Moreover, relay status information is transmitted to the satellite on-board computer and ground test support equipment through the remote-control connector 121. Specifically, the relay status information transmitted to the satellite on-board computer can be transmitted to the ground test support equipment through the satellite transceiver, and the battery power can be controlled by remotely turning on/off the relay switch.

Moreover, as described above, the first to fourth power input connectors 111, 112, 113, and 114 are connected to the first relay module 170 having the first and second relays 171 and 172 and the second relay module 180 having the first and second relays 181 and 182 through the first output lines 111a, 112a, 113a, and 114a and the second output lines 111b, 112b, 113b, and 114b. Accordingly, even when two relay switches of the four relay switches fail, the remaining two relay switches can sufficiently satisfy the power requirements of the satellite.

In addition, as illustrated, the first and second relay modules 170 and 180 are disposed on the third side surface panel portion 130 and the fourth side surface panel portion 140 having an angle of 90 degrees therebetween and arranged in two different axial directions. Accordingly, it is possible to guarantee biaxial stability against random vibration or random shock.

In addition, the first to fourth side surface panel portions 110, 120, 130, and 140, the upper plate panel portion 150, and the bottom surface panel portion 160 constituting each surface of the battery isolation switch 100 of the present disclosure are all coupled to the first to fourth pillars 101, 102, 103, and 104 of the battery isolation switch 100 by screws and washers and have a structure that can be separated and assembled independently. Accordingly, the battery isolation switch has excellent vibration and shock resistance and has excellent equipment maintenance.

For example, when the battery isolation switch of the present disclosure having the configuration as described above is applied to a satellite, it is effective in preventing connector damage caused by manually connecting and disconnecting the battery connector during satellite test or assembly, worker electric shock accident, and consequent battery damage.

In addition, after monitoring the status information of each relay of the battery isolation switch by remote measurement, the power of the satellite battery is turned on/off by remote command. Accordingly, it is possible to prevent battery discharge due to delays in satellite test, assembly, transportation, or launch standby.

In addition, instead of one specially designed heavy battery according to the battery power capacity required by the satellite, it is possible to connect and use two satellite batteries sold as standard. Therefore, it is advantageous to acquire the degree of freedom of the battery and distribute the weight of the entire satellite, thereby securing the mobility of the satellite.

In addition, the present disclosure can be applied not only to battery isolation switches for satellites, but also to launch vehicles and various space industries, and can be used in numerous industries that require high power, such as electric vehicles, aircraft, and electric Vertical Take Off and Landing (eVTOL) vehicles.

Above, the present disclosure has been described with reference to preferred embodiments, but the present disclosure is not limited thereto, and various modifications may be made by those skilled in the art within the scope without departing from the gist of the present disclosure described in the claims below.

### [Description of Reference Numerals]

| | | | |
|---|---|---|---|
| 100: | battery isolation switch | 101: | first pillar |
| 102: | second pillar | 103: | third pillar |
| 104: | fourth pillar | 110: | first side surface panel portion |
| 120: | second side surface panel portion | 130: | third side surface panel portion |
| 140: | fourth side surface panel portion | 150: | upper plate panel portion |
| 160: | bottom surface panel portion | 170: | first relay module |
| 180: | second relay module | 190: | integrated output unit |

## Claims

1. A battery isolation switch comprising:
a power input connector to which power is input from a battery;
a first side surface panel portion 110 disposed on a side surface of the battery isolation switch;
an upper plate panel portion 150 disposed in an upper portion of the battery isolation switch; and
a bottom surface panel portion 160 provided with a power output connector 161 and disposed in a lower portion of the battery isolation switch.

2. The battery isolation switch of claim 1, further comprising a second side surface pane portion 120, a third side surface panel portion 130, and a fourth side surface panel portion 140 disposed on the side surface of the battery isolation switch.

3. The battery isolation switch of claim 2, further comprising a first pillar 101, a second pillar 102, a third pillar 103, and a fourth pillar 104 respectively disposed at four corners of the battery isolation switch.

4. The battery isolation switch of claim 3, wherein the upper plate panel portion 150 is detachably coupled to upper ends of the first to fourth pillars 101, 102, 103, and 104 with screws, and
the bottom surface panel portion 160 is detachably coupled to lower ends of the first to fourth pillars 101, 102, 103, and 104 with screws.

5. The battery isolation switch of claim 4, wherein the first side surface panel portion 110 is detachably coupled to the first pillar 101 and the second pillar 102 with screws,
the second side surface panel portion 120 is detachably coupled to the second pillar 102 and the fourth pillar 104 with screws,
the third side surface panel portion 130 is detachably coupled to the first pillar 101 and the third pillar 103 with screws, and
the fourth side surface panel portion 140 is detachably coupled to the third pillar 103 and the fourth pillar 104 with screws.

6. The battery isolation switch of claim 1, wherein the power input connector is disposed in the first side surface panel portion 110.

7. The battery isolation switch of claim 2, wherein a remote-control connector 121 is disposed in the second side surface panel portion 120.

8. The battery isolation switch of claim 1, wherein the power input connector includes a first power input connector 111 and a second power input connector 112 to which power is input from a first battery 10, and
a third power input connector 113 and a fourth power input connector 114 to which power is input from a second battery 20.

9. The battery isolation switch of claim 8, wherein a first relay module 170 and a second relay module 180 separated from each other are provided inside the battery isolation switch.

10. The battery isolation switch of claim 9, wherein the first relay module 170 includes a first relay 171 and a second relay 172, and
the second relay module 180 includes a first relay 181 and a second relay 182.

11. The battery isolation switch of claim 10, wherein the first power input connector 111 is connected to the first relay module 170 through a first output line 111a and connected to the second relay module 180 through a second output line 111b,
the second power input connector 112 is connected to the first relay module 170 through a first output line 112a and connected to the second relay module 180 through a second output line 112b,
the third power input connector 113 is connected to the first relay module 170 through a first output line 113a and connected to the second relay module 180 through a second output line 113b, and
the fourth power input connector 114 is connected to the first relay module 170 through a first output line 114a and connected to the second relay module 180 through a second output line 114b.

12. The battery isolation switch of claim 11, further comprising an integrated output unit 190 to which power is input from the first relay module 170 and the second relay module 180,
wherein power from the first relay module 170 and the second relay module 180 is integrated in the integrated output unit 190 and transmitted to the power output connector 161.

13. The battery isolation switch of claim 11, further comprising a second side surface panel portion 120, a third side surface panel portion 130, and a fourth side surface panel portion 140 disposed on the side surface of the battery isolation switch, wherein the first relay module 170 is disposed on the third side surface panel portion 130, and
the second relay module 180 is disposed on the fourth side surface panel portion 140 facing the first side surface panel portion 110.

14. The battery isolation switch of claim 1, wherein a groove 162 recessed upward is formed on a bottom surface of the bottom surface panel portion 160, and the power output connector 161 is disposed in the groove 162.

15. The battery isolation switch of claim 14, wherein the battery isolation switch is coupled to a target on which the battery isolation switch is installed by forming a mounting surface on the bottom surface of the bottom surface panel portion 160.

16. The battery isolation switch of claim 8, wherein four first to fourth power input connectors 111, 112, 113, and 114 are arranged in parallel.

17. The battery isolation switch of claim 1, wherein three power output connectors 161 are arranged in parallel.

18. The battery isolation switch of claim 7, wherein two remote-control connectors 121 are arranged in parallel.
